(19) Europäisches Patentamt
European Patent Office
Office européen des brevets

(11) **EP 0 637 405 B1**

## (12) EUROPÄISCHE PATENTSCHRIFT

(45) Veröffentlichungstag und Bekanntmachung des Hinweises auf die Patenterteilung:
**09.07.1997 Patentblatt 1997/28**

(51) Int Cl.⁶: **H01Q 3/26**, H04B 10/14

(21) Anmeldenummer: **93908951.2**

(86) Internationale Anmeldenummer:
**PCT/EP93/00927**

(22) Anmeldetag: **16.04.1993**

(87) Internationale Veröffentlichungsnummer:
**WO 93/22805 (11.11.1993 Gazette 1993/27)**

(54) **EINRICHTUNG ZUR GENERIERUNG OPTISCHER SIGNALE**

DEVICE FOR GENERATING OPTICAL SIGNALS

GENERATEUR DE SIGNAUX OPTIQUES

(84) Benannte Vertragsstaaten:
**DE FR GB IT**

(30) Priorität: **23.04.1992 DE 4213409**

(43) Veröffentlichungstag der Anmeldung:
**08.02.1995 Patentblatt 1995/06**

(73) Patentinhaber:
• **Daimler-Benz Aerospace Aktiengesellschaft
81663 München (DE)**
• **GEC-MARCONI LIMITED
Stanmore, Middlesex HA7 4LY (GB)**

(72) Erfinder:
• **BIRKMAYER, Wolfram
D-8414 Maxhütte-Haidhof (DE)**
• **WALE, Michael, John 53 Bengal Lane
Green Norton
Northamptonshire NN12 8BE (GB)**
• **BUCK, Brian, Jeffrey
Northamptonshire NN12 8EQ (GB)**
• **HOLDEN, Anthony, James
Northamptonshire NN12 8EQ (GB)**

(56) Entgegenhaltungen:
**WO-A-88/05215          US-A- 5 001 336**

**Beschreibung**

Die Erfindung bezieht sich auf eine Einrichtung *zum Empfang optischer Signale mit einer unbegrenzten Zahl von Eingängen gemäß dem Oberbegriff* des Anspruches 1.

Der Betrieb einer phasengesteuerten Antenne, wie sie zum Beispiel bei Funkverbindungen oder beim Radar verwendet wird, ist von der kohärenten Summierung einer großen Anzahl Signale an einem gemeinsamen Punkt abhängig. Bei einer Empfangsantenne müssen die Signale von allen Antennenteilen kohärent - d.h. mit einer definierten Amplitude und Phase - summiert werden, um eine Antennenkeule zu bilden. Die Anzahl der in diesem Falle zu summierenden Eingänge kann bis zu mehreren Tausend betragen. Bei einer Sendeantenne müssen nur die vom Antennenelement zu übertragenden, unabhängigen Signale zum Beispiel *von* verschiedenen *Antennendiagrammen* summiert werden. Diese Zahl ist gewöhnlich viel geringer, könnte jedoch in einer typischen, repräsentativen Satellitenfunkanwendung 10 - 20 betragen. In beiden Fällen ist es jedoch unabdingbar, daß die Signalsummierung so erfolgt, daß Frequenzverhalten, Rauschzahl oder andere wichtige Parameter des Mikrowellensystems minimal beeinflußt werden.

Bei Untersuchungen an optischen Verteilemetzen für Mikrowellenantennen in phasengesteuerter Anordnung wird beim Stand der Technik allgemein davon ausgegangen, daß die Lichtleiterverbindungen in einzelnen Empfängem enden und die verstärkten Photoelektronenströme anschließend im elektrischen Bereich summiert werden. Eine derartige Konfiguration hat mehrere bedeutende Nachteile, wie nachstehend erläutert wird.

Das entstehende thermische Rauschen der optischen Empfänger ist sehr groß, außer bei hohen optischen Leistungspegeln, während die Masse und der Stromverbrauch einer derart großen Anzahl von Empfängern oft ausschlaggebend für das gesamte Systembudget sind. Diesbezüglich wäre es also viel besser, die Photoelektronenströme an der Quelle zu summieren und dann den zusammengefaßten Photoelektronenstrom zu verstärken. Es muß jedoch unbedingt darauf geachtet werden, daß bei dem gewählten Signalsummierungsverfahren keinerlei optische Störung zwischen den verschiedenen Signalen auftritt, da nur die Phase der Modulation des optischen Trägers beim Antennenbetrieb von Bedeutung ist. In einer Anwendung, wie sie hier vorliegt, würde eine kohärente optische Interferenz den Rauschpegel erhöhen oder zu Störsignalen im System führen.

Grundsätzlich ist es möglich, alle optischen Signale in einem einzigen Detektor zusammenzufassen. In diesem Falle ist dann jedoch äußerste Vorsicht geboten, da sichergestellt werden muß, daß keine kohärente Interferenz zwischen benachbarten *Hauptkeulen des Antennendiagramms* auf der Oberfläche des Photodetektors auftritt. Hierzu müßten zwangsläufig Koppeloptiken mit sehr hoher numerischer Apertur eingesetzt werden, um zu gewährleisten, daß alle am Detektor ankommenden Signale in getrennte, nicht überlappende Bereiche fallen. Dies ist aber besonders schwierig bei einem Detektor, der bei Mikrowellenfrequenzen arbeitet, da das Detektorelement sehr klein sein muß und sein Durchmesser nicht größer als 50 µm sein soll, um eine entsprechend niedrige Kapazit*ät* in diesem Element aufrechterhalten zu können. Zum Stand der Technik wird auf die Druckschrift "IEE Proc., pt. J.,135 pp. 146-152 (1988) von Humphreys, D.A. and Moseley, A.J. hingewiesen.

*Es sind schon verschiedene Ausführungsformen bekannt, bei denen optische Empfänger für modulierte Signale mit einigen Eingängen auf einem gemeinsamen Träger integriert wurden, so beispielsweise aus der US-A-5,001,336 und der WO-A-88/05215. Diese Vorrichtungen sind in den offenbarten Ausführungsbeispielen für die Summierung von mehr als drei bis vier Signalen bei hohen Frequenzen über 10 GHz nicht geeignet.*

Der vorliegenden Erfindung liegt die Aufgabe zugrunde, eine Einrichtung der eingangs genannten Art zu schaffen, die es ermöglicht, die kohärente Addition einer unbegrenzten Zahl von Signalen aus verschiedenen Quellen ohne spezifische Verluste durchzuführen und gleichzeitig eine hohe elektrische Summierungsleistung bei Mikrowellenfrequenzen *im Bereich über 10 GHz* zu gewährleisten.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist die Erfindung anhand von Ausführungsbeispielen erläutert; diese Erläuterung wird durch die Figuren der Zeichnung ergänzt. Es zeigen:

Fig. 1    ein Blockschaltbild einer Übertragungsleitung,

Fig. 2    ein Schemabild einer typischen Konfiguration von Photodioden auf einer Übertragungsleitung gemäß Fig. 1,

Fig. 3a    ein Schemabild eines gleichphasigen Stromteilers nach dem Wilkinson-Standard-Kombinationskreis,

Fig. 3b    ein Schemabild eines gleichphasigen Stromteilers gemäß Fig. 3a mit erweiterter Bandbreite,

Fig. 4    ein Blockschaltbild eines Empfängers mit mehreren Eingängen für vollständig kohärente Signalsummierung mit Mehrfachleitungsarchitektur mit gleichphasigen *Summierungsnetzwerken.*

Fig. 5    ein Blockschaltbild einer bevorzugten Konfiguration eines Empfängers mit mehreren Eingängen zur Summierung inkohärenter Signale.

Der allgemeine Erfindungsgedanke der nachfolgend beschriebenen Ausführungsformen sieht vor, daß die Ausgangsströme von einer linearen Anordnung getrennter Photodioden in einer einzigen elektrischen Übertragungsleitung summiert werden. Dies ermöglicht einmal die Verwendung von Photodioden mit Abmessungen zwischen beispielsweise 25 - 50 μm Durchmesser an jeder Lichtleiterschnittstelle und andererseits gleichzeitig die Gewährleistung einer hohen elektrischen Summierungsleistung bei Mikrowellenfrequenzen. Die vorgeschlagenen Maßnahmen ermöglichen weiterhin die kohärente Addition von Signalen aus verschiedenen Quellen ohne spezifischen elektrischen Verlust.

Bei dem nachfolgend beschriebenen Ausführungsbeispiel ist die Grundlage des Summierungskreises eine Mikrowellenübertragungsleitung, die auf einem geeigneten Substrat gefertigt ist, beispielsweise auf einem Keramik- oder Schaltkartenmaterial. Diese Basisübertragungsleitung ist so ausgelegt, daß sie eine relativ hohe Impedanz $Z_U$ im Normalzustand (unbelastet) aufweist. Die Photodioden werden dann zwischen dem sogenannten "heißen Draht" und der Masse mit dieser Übertragungsleitung verbunden und zwar in Abständen, die in Bezug auf die Mikrowellenlänge in der Übertragungsleitungsstruktur kurz sind, so daß diese Photodioden eine quasi-verteilte Ladung auf der Basisleitung bilden. Die Lastimpedanz $Z_L$ ist geringer als $Z_U$, da die zusätzliche Kapazität der Dioden jetzt inbegriffen ist. Die Photodioden werden jeweils von Lichtleitern gespeist, die die Eingangssignale zum Empfänger leiten. Die entstehenden Photoelektrodenströme werden dann in den Übertragungsleitungsverbund eingespeist.

Die Anwendung dieses vorgeschlagenen Konzeptes wird nachfolgend durch die Ableitung der mathematischen Form der in der Übertragungsleitung eines Empfängers fließenden Ströme weiter erläutert. Zunächst soll der Fall der kohärenten Signalsummierung in einer phasengesteuerten Empfangsantenne erläutert werden, bei der die Phase des eintretenden Signals an jeder Photodiode so eingestellt ist, daß bei Berücksichtigung einer zusätzlichen Phasenverschiebung innerhalb des Empfängers die Signale in dem Phasenverhältnis summiert werden, das zur Steuerung der Antennenkeule in die gewünschte Richtung notwendig ist.

Es wird die Form für die Ströme i(x) entlang der Übertragungsleitung abgeleitet, die der kohärenten phasenrichtigen Addition der mitwirkenden Signalströme in der Richtung +x entspricht. Es wird die Phase der einzelnen Ströme i(x) gesteuert, d.h.

$$i(x) = i_0 e^{j\phi \, x} \tag{1}$$

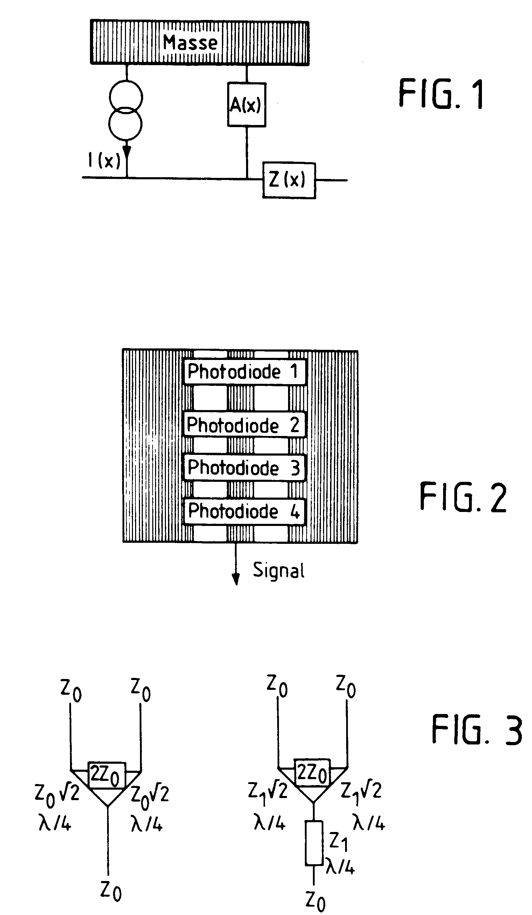

Wie in Fig. 1 veranschaulicht, wird die Übertragungsleitungsgleichung für die Verbundleitung erstellt, die aus der Basisübertragungsleitung auf Substrat besteht, mit der Kapazität der Photodioden belastet ist und die auch die von diesen Photodioden erzeugten Signalströme beinhaltet. Es wird davon ausgegangen, daß die Abstände zwischen den Photodioden so klein sind, daß Ladungen und Signaleinstreuungen vollständig verteilt sind:

$$\frac{d^2 I}{dx^2} = AZI + \frac{di}{dx} \tag{2}$$

$$\frac{d^2 V}{dx^2} = AZV - Zi \tag{3}$$

Es wird eine lineare Phasenvariation mit x gewählt,

$$i = i_0 e^{j\phi x} \tag{4}$$

woraus sich ergibt:

$$\frac{d^2 I}{dx^2} = AZI + j\phi i_0 e^{j\phi x} \tag{5}$$

Diese Gleichung kann als komplementäre Funktion und partikuläres Integral gelöst werden. Die komplementäre Funktion entspricht den auf der Leitung vorwärts und rückwärts wandernden Wellen. Eine *Auflösung nach I(x)* führt zu dem Ergebnis:

$$I(x) = I_1 e^{jkx} + I_2 e^{-jkx} - j \frac{i_0 \phi}{(AZ + \phi^2)} \cdot e^{j\phi x} \tag{6}$$

mit einer entsprechenden Gleichung für die Spannung

$$-AV(x) = jkI_1 e^{jkx} - jkI_2 e^{-jkx} - j \frac{i_0 \phi^2}{(AZ + \phi^2)} e^{j\phi x} - i_0 e^{j\phi x} \tag{7}$$

Eine Untersuchung dieser Gleichung zeigt, daß mit einer Bewegung entlang der Leitung, die für den Strom gewählte Phase um Null pendelt und zwar mit einer Periodendauer, die der Länge der Mikrowellen auf der Leitung entspricht. Ersetzt man

$$- AZ \approx CL\omega^2 - j\delta \tag{8}$$

so wird ein Störverlust pro Längeneinheit $\delta = \omega CR$ eingebracht.

Nach weiterer Manipulation werden die Ergebnisse erhalten:

$$I_1 = \frac{i_0}{(Z_0 + \frac{jk}{a})} \left( \frac{1}{A} + \frac{Z_0 k}{\delta} + \frac{jk^2}{A\delta} \right) \tag{9}$$

und

$$I_2 = 0$$

Das heißt nun, daß die zurückwandernde Welle eliminiert wird und daß der gesamte Signalstrom die vorwärtswandernde Welle zum Empfänger bildet. Obwohl die Leitung in umgekehrter Richtung endet, geht kein Signalstrom an das Leitungsende verloren. Es muß jedoch ausdrücklich darauf hingewiesen werden, daß diese Situation nur dann auftritt, wenn die Signalstromphasen für kohärente Addition gewählt wurden. Andere Signale haben allgemein schwankende Phasen und werden gleichmäßig in beide Richtungen verteilt. Letztere Signale haben Störrauschquellen, entweder verursacht durch Wärmequellen oder optisches Schrotrauschen. Bei dem vorstehend beschriebenen Empfänger tritt daher in Bezug auf die eventuell vorhandenen Geräuschquellen eine Verstärkung durch die Verarbeitung auf.

Eine spezielle technologische Lösungsmöglichkeit zur Realisierung des Erfindungsgedankens, die auch bei der vorstehend beschriebenen experimentellen Demonstration gegeben ist, ist in der Fig. 2 skizziert. Hier ist das Photodiodenarray als einziger monolithischer Chip gefertigt oder als kleiner Chipsatz, von denen jeder viele Photodioden enthält. Somit können sowohl die Plazierung der Dioden als auch die in Verbindung mit der Faserkopplung auftretende parasitäre Kapazit**ät** und Indukt**ivität** sehr genau gesteuert werden. Wie **es** bei der Konstruktion **von** Mikrowellendetektor**en** *üblich und beispielsweise in den eingangs genannten Literaturstellen beschrieben ist,* wird für die Einspeisungsstruktur ein koplanarer Hohlleiter (CPW) zusammen mit PIN-Photodioden mit Substrateinkopplung verwendet. Der optische Zugriff von den Lichtleitern erfolgt durch die größtmögliche Oberfläche des Detektorarrays, wobei das Substrat der Photodioden bei der verwendeten optischen Wellenlänge durchlässig ist.

Um eine in die Praxis umsetzbare Struktur zu erhalten, sollen die tatsächlichen Werte der Parameter der Übertragungsleitung nachstehend untersucht werden. Die Photodioden müssen in Bezug auf die Mikrowellenlänge dicht gepackt und nicht als eine Reihe von Einzelelementen angeordnet sein, so daß die Ladung als verteilt angesehen werden kann. Dies ist eine wesentliche Voraussetzung, damit der Sperrbereich der entstehenden Tiefpaßfilterkurve deutlich über der geforderten Betriebsfrequenz liegt. Auf der anderen Seite erhöht diese Packungsdichte die Kapazität der Leitung und reduziert so Mikrowellenlänge und Impedanz. Der Versuch, die Impedanz durch Erhöhung der Leitungsindukt**ivität** wiederherzustellen, führt zu einer weiteren Verringerung der Wellenlänge. Um eine geeignete Kopplung an ein Lichtleitarray zu erreichen, sollte der Mittenabstand der Photodioden größer sein als der Durchmesser des Fasermantels (125μm). Auf jeden Fall würde eine Anordnung in geringeren Abständen normalerweise zu einer übermäßigen kapazitiven Belastung auf der Übertragungsleitung führen.

Bei den typischen, vorstehend beschriebenen Parametern ist die Impedanz der belasteten Leitung niedriger als 50 Ω. Hierbei handelt es sich um die für den nachfolgenden, rauscharmen Verstärker übliche Eingangsimpedanz. Daher sollte am Ausgang der Summierungsleitung ein Transformationsstück vorgesehen werden, z.B. in Form eines $\lambda/4$-Anpassungsgliedes mit einer Impedanz von $\sqrt{50 Z_L}$ und einer Länge von $\lambda/4$, oder ca. 1 mm in diesem System bei 14 GHz. Der zusätzlich von diesem Transformationsnetz beanspruchte Platz ist daher ziemlich gering. In Fällen, in denen eine genaue Anpassung über einen größeren Frequenzbereich erforderlich ist, können konventionelle Mikro*strip*elemente oder koplanare Hohlleiter-Übertragungselemente verwendet werden, wie sie in Standardbeschreibungen für Mikrowellen angeführt werden.

Bei der Realisierung des vorliegenden Erfindungsgedankens werden typischerweise mehrere Übertragungsleitungen verwendet, um alle Modulausgänge zur **Bildung des Antennendiagramms** zu summieren. Die erforderliche Summierungsfunktion kann durch Verwendung eines gleichphasigen Stromteilers - wie er in Fig. 3 veranschaulicht ist - erfolgen.

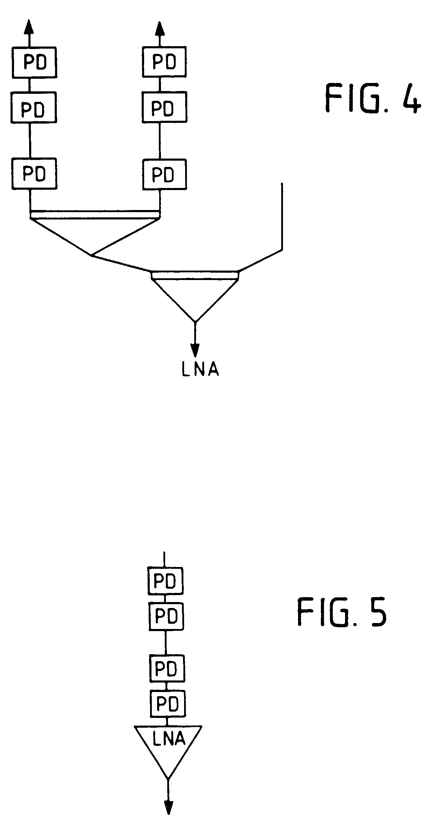

Bei inkohärenten Signalen verursacht der für die Summierung verwendete Wilkinson-Frequenzteiler einen Eigenverlust von 3 dB. Bei der kohärenten Summierung ist der Eigenverlust jedoch gleich null, da die Signale gleichphasig sind, denn es gibt kein Potentialgefälle über den $2Z_0$ - Widerstand und somit keine Streuung. Folglich bleiben nur die geringfügigen, durch die Leiter und Nichtleiter verursachten Restverluste. Daher kann dieses Bauelement ohne Bedenken verwendet werden, um ein Netz der erforderlichen Größe zu bauen, wie die Fig. 4 veranschaulicht.

Das Schema der Photodiodenübertragung kann auf die Summierung unabhängiger (inkohärenter) Signale angewendet werden. Diese Signale treten beispielsweise beim Betrieb einer Sendeantenne als Mehrfachstrahler auf. In diesem Fall geht jedoch die richtungsgebundene Natur der Signalsummierung verloren. Der Photoelektronenstrom wird gleichmäßig in Richtung LNA (rauscharmer Verstärker) und Abschluß der Übertragungsleitung aufgeteilt. Wenn unabhängige Signale summiert werden müssen, sollten Konstruktionen mit vielen gleichphasigen Kombinatoren vermieden werden, da bei nicht kohärenten Signalen auf jeder Stufe ein Verlust von 3 dB auftritt. Eine für diesen Fall besser geeignete Konfiguration wäre die Anordnung aller Photodioden in Reihe, wie es in der Fig. 5 veranschaulicht ist.

Der gemäß dem vorbeschriebenen und erläuterten Erfindungsgedanken realisierte optische Empfänger mit mehreren Eingängen weist als kennzeichnendes Merkmal auf, daß der exteme HF-Phasensprung - soweit die Signale kohärent sind und mit einem spezifischen Phasenverhältnis addiert werden müssen, an jedem Signaleingang so eingestellt wird, daß sich alle Signalphotoelektronenströme kohärent in Richtung des rauscharmen Verstärkers (LNA) summieren und kein Signalelektronenstrom im Endpunkt verloren geht. Andererseits sind die Einstreuungen (Schrotrauschen und Wärmerauschen) von den einzelnen Detektorelementen nicht kohärent. Dementsprechend werden diese Einstreuungen gleichmäßig zwischen den vorwärts und rückwärts wandemden Komponenten aufgeteilt. Die vorwärts wandernden Komponenten werden zum LNA gelenkt, während die rückwärts wandernde Komponente im Endpunkt verlorengeht. Daher erreicht der Empfänger beim gleichphasigen Signal eine Verbesserung des Rauschverhältnisses.

Dieser Vorteil bleibt auch erhalten, wenn gleichphasige Verstärkerelemente (beispielsweise vom Typ Wilkinson) zum Bau eines größeren Netzes verwendet werden. Ein Kombinationsnetz dieser Art hat keinerlei Eigenverlust bei den kohärenten Signalen, so daß sich diese lediglich addieren, während der Verlust bei inkohärenten Signalen 3 dB beträgt. Die Hälfte der von jedem beteiligten Element (vom Leitungsende und von der Summierung der einzelnen Detektoren) erzeugten Rauschleistung geht daher am Kombinationselement verloren, während die Signalleistung beibehalten wird, selbstverständlich abgesehen von den normalen Leiter- und Nichtleiterverlusten.

Wenn die Signale nicht kohärent sind - beispielsweise im Falle einer Sendeantenne als Mehrfachstrahler - sind sowohl die Signalelektronenströme als auch das von jedem Detektor verursachte Rauschen, wie schon erwähnt, inkohärent und werden daher gleichmäßig zwischen LNA und Leitungsende aufgeteilt. Bei dem vom rauscharmen Verstärker empfangenen Rauschen handelt es sich um das Wärmerauschen des Leitungsendes plus der Hälfte der summierten Rauschleistung der einzelnen Detektorelemente.

**Patentansprüche**

1. Einrichtung zum Empfang optischer, mit Frequenzen > 10 GHz modulierter Signale mit einer unbegrenzten Zahl von Eingängen, wobei mit Photodioden die an den Eingängen eingespeisten optischen Signale in elektrische Signale umgewandelt und die elektrischen Signale summiert werden, **dadurch gekennzeichnet**,

- daß die Photodioden voneinander getrennt in einer linearen Anordnung zusammengefaßt sind und deren Ausgangsströme in einer einzigen elektrischen Übertragungsleitung, die als Basisleitung auf einem Keramik- oder Schaltkartenwerkstoff aufgebracht ist, summiert werden,

- daß diese Übertragungsleitung eine hohe Impedanz im unbelasteten Normalzustand ZU aufweist,

- daß die Verbindungen der Photodioden mit der Übertragungsleitung in Bezug auf die Mikrowellenlänge kurze Abstände aufweisen und

- daß für die Einspeisungsstruktur ein koplanarer Hohlleiter (CPW) zusammen mit PIN-Photodioden mit Substrateinkopplung verwendet wird.

2. Einrichtung nach Anspruch 1, dadurch gekennzeichnet, daß die Photodioden zu einem einzigen monolithischen Array-Chip zusammengefaßt und auf einen Hybridschaltkreis montiert sind.

3. Einrichtung nach einem der Ansprüche 1 bis 2, dadurch gekennzeichnet, daß die Photodioden in Bezug auf die Mikrowellenlänge als flächenmäßig dicht aneinander gepackte Einzelelemente des Arrays auf dem Chip montiert sind, wobei der Mittenabstand der Photodioden größer ist als der Durchmesser des Lichtleiter-Fasermantels (125 μm).

4. Einrichtung nach einem der Ansprüche 1 bis 3, dadurch gekennzeichnet, daß am Ausgang der als Summierungsleitung dienenden Übertragungsleitung jeweils ein Transformationsstück, beispielsweise in Form eines λ/4-Anpassungsgliedes mit einer Impedanz von $\sqrt{50 L_z}$ und einer Länge von λ/4 oder 1 mm in einem System bei 14 GHz angeordnet ist.

5. Einrichtung nach einem der Ansprüche 1 bis 4, dadurch gekennzeichnet, daß mehrere Übertragungsleitungen **zusammengefaßt** sind, um alle Modulausgänge zur Bildung eines **Antennendiagrammes** zu summieren, wobei die Summierungsfunktion durch Anordnung eines oder mehrerer gleichphasigen/r **Summierungsnetzwerke(s) erfolgt.**

6. Einrichtung nach einem der Ansprüche 1 bis 5, dadurch gekennzeichnet, daß die HF-Phasen der an den einzelnen Dioden ankommenden optischen Signale so einstellbar sind, daß der zusammengefaßte Elektronenstrom nur in einer Richtung ausschließlich entlang der Übertragungsleitung zum Einrichtungs-Ausgang fließt.

7. Einrichtung nach einem der Ansprüche 1 bis 6, dadurch gekennzeichnet, daß zum Bau größerer Kombinationsnetze gleichphasige Verstärkerelemente, wie beispielsweise vom Wilkinson-Typ, angeordnet sind.

## Claims

1. Device for receiving optical signals modulated with frequencies > 10 GHz with an unlimited number of inputs, using photodiodes to convert the optical signals fed in at the inputs into electrical signals and to sum the electrical signals, **characterised in that**

- the photodiodes are comprised separate from one another in a linear arrangement and the output currents therefrom are summed into a single electric transmission line which is mounted as a base line on a ceramic material or printed circuit material,

- this transmission line has high impedance in the normal, no-load state ZU,

- the connections from the photodiodes to the transmission line feature short distances in relation to the microwavelength, and

- a coplanar hollow waveguide (CPW) together with PIN photodiodes with let-in substrates is used for the feeder structure.

2. Device according to claim 1, characterised in that the photodiodes are combined into a single monolithic array chip and mounted on a hybrid circuit.

3. Device according to either of claims 1 and 2, characterised in that in relation to the microwavelength the photodiodes are mounted on the chip in the form of discrete array elements packed tightly against one another in terms of surface density, the centre-to-centre distance between the photodiodes being greater than the diameter of the fibre buffer around the light guide (125 μm).

4. Device according to any of claims 1 to 3, characterised in that arranged at the output of the transmission line which serves as the summation line is a transforming section, for example in the form of a $\lambda/4$ matching section with an impedance of $\sqrt{50Z_L}$ and a length of $\lambda/4$ or 1 mm in a system at 14 GHz.

5. Device according to any of claims 1 to 4, characterised in that a plurality of transmission lines are **combined** so as to sum all the module outputs to create an **antenna pattern,** the summation function being provided by arrangement of one or more co-phasal **summation networks.**

6. Device according to any of claims 1 to 5, characterised in that the HF phases of the incoming optical signals at the individual diodes can be adjusted so that the combined electron current only flows in one direction exclusively along the transmission line to the device's output.

7. Device according to any of claims 1 to 6, characterised by arranging co-phasal amplifier elements, for example of the Wilkinson type, to build bigger combination networks.


**Revendications**

1. Dispositif pour la réception de signaux optiques modulés, de fréquence > 10 GHz, comportant un nombre non limité d'entrées, les signaux optiques appliqués aux entrées étant transformés en signaux électriques au moyen de photodiodes et les signaux électriques étant additionnés, caractérisé par le fait

   - que les photodiodes indépendantes les unes des autres sont groupées en un agencement linéaire et que leurs courants de sortie sont additionnés dans une ligne unique de transmission électrique qui est placée comme ligne de base sur un substrat céramique ou sur un matériau à circuit imprimé,
   - que la ligne de transmission présente une impédance élevée à l'état normal, non chargé $Z_U$,
   - que les distances des liaisons entre les photodiodes et la ligne de transmission sont courtes par rapport à la longueur des microondes et
   - que l'on utilise pour la structure d'alimentation un conducteur creux coplanaire (CPW) avec des photodiodes PIN à couplage par le substrat.

2. Dispositif selon la revendication 1, caractérisé par le fait que les photodiodes sont groupées en une puce-matrice monolithique unique et sont montées sur un circuit hybride.

3. Dispositif selon l'une des revendications 1 à 2, caractérisé par le fait que les photodiodes, par rapport à la longueur des micro-ondes, sont montées sur la puce en tant qu'éléments indépendants serrés de la matrice, l'entraxe des photodiodes étant supérieur au diamètre de la gaine de la fibre optique (125 μm).

4. Dispositif selon l'une des revendications 1 à 3, caractérisé par le fait qu'un tronçon transformateur, par exemple sous la forme d'un élément adaptateur $\lambda/4$, avec une impédance de $\sqrt{50Z_L}$ et une longueur égale à $\lambda/4$ ou à 1 mm dans un système à 14 GHz, est disposé chaque fois à l'entrée de chaque ligne de transmission servant de ligne d'addition.

5. Dispositif selon l'une des revendications 1 à 4, caractérisé par le fait que plusieurs lignes de transmission sont groupées aux fins d'additionner toutes les sorties de module pour former un diagramme d'antenne, la fonction d'addition étant réalisée par la disposition d'un ou de plusieurs réseau(x) additionneur(s) en phase.

6. Dispositif selon l'une des revendications 1 à 5, caractérisé par le fait que les phases HF des signaux optiques qui parviennent aux différentes diodes peuvent être réglées de telle sorte que le courant global d'électrons circule seulement dans une direction, exclusivement le long de la ligne de transmission menant à la sortie du dispositif.

7. Dispositif selon l'une des revendications 1 à 6, caractérisé par le fait que pour former des réseaux de combinaison plus importants, on utilise des éléments amplificateurs en phase, par exemple de type Wilkinson.

FIG. 1

FIG. 2

FIG. 3

FIG. 4

FIG. 5